# EUROPÄISCHE PATENTSCHRIFT

(11) **EP 2 391 517 B1**
(45) Veröffentlichungstag und Bekanntmachung des Hinweises auf die Patenterteilung: **04.12.2013**
(21) Anmeldenummer: 10702398.8
(22) Anmeldetag: 15.01.2010
(51) Int. Cl.: B60G 7/00, B60G 7/02, F16F 1/387, F16F 13/14

(54) **QUERLENKER-LAGERBÜCHSE ANORDNUNG EINER KRAFTFAHRZEUGAUFHÄNGUNG**
TRANSVERSE CONTROL ARM - BUSHING ARRANGEMENT OF A MOTOR VEHICLE SUSPENSION
DISPOSITION D'UN BRAS OSCILLANT TRANSVERSAL AVEC UN COUSSINET D'UNE SUSPENSION DE VÉHICULE AUTOMOBILE

(30) Priorität: 28.01.2009 DE 102009006356
(43) Veröffentlichungstag der Anmeldung: 07.12.2011
(73) Patentinhaber: Ford Global Technologies, LLC, Dearborn, MI 48126 (US)
(72) Erfinder: GERHARDS, Thomas, 52382 Niderzier (DE); FRANTZEN, Michael, Johannes, 52076 Aachen (DE); SIMON, Marc, 50735 Köln (DE); DAVID, Wolfgang, 52074 Aachen (DE); BAYER, Martina, 50259 Pulheim (DE); WOHLERS, Jens, 49448 Lemförde (DE); SCHEPER, Frank, 49624 Löningen (DE); KLOSTERMEIER, Karsten, 32479 Hille (DE); SANDER, Karsten, 50259 Pulheim (DE); RODENBERG, Andreas, 31603 Diepenau Essern (DE)
(74) Vertreter: Drömer, Hans-Carsten
(86) Internationale Anmeldenummer: PCT/DE2010/000032
(87) Internationale Veröffentlichungsnummer: WO 2010/085934

(56) Entgegenhaltungen:
- DE-A1- 4 215 195
- DE-A1- 10 114 466
- DE-A1- 10 257 221
- DE-A1- 10 311 211
- DE-A1- 10 338 627
- DE-A1- 19 841 805
- DE-A1- 19 923 698
- DE-A1-102004 009 724
- DE-A1-102007 018 569
- DE-U1- 20 004 149
- JP-A- 61 282 106
- JP-A- 2001 271 865
- US-A1- 2004 084 601
- J.Reimpell: "Fahrwerktechnik: Grundlagen" 31. Dezember 1988 (1988-12-31), Vogel Buchverlag , Würzburg , XP002582815 ISBN: 3802301595 , Seiten 176-179 Seite 178, Absatz 2 - Absatz 3; Abbildungen 3.65,3.65a,

## Beschreibung

Die Erfindung betrifft eine Querlenker-Lagerbuchse Anordnung bestehend aus einem Querlenker mit einem Grundkörper, der zumindest einen ersten Befestigungsbereich zum Anlenken an ein Fahrzeugrahmenelement aufweist, wobei der erste Befestigungsbereich einen Zapfen aufweist, der von einer Lagerbuchse umfasst ist, wobei der Querlenker einen Anschlagbereich aufweist.

Eine Solche Querlenker-Lagerbuchse Anordnung ist aus der DE-U-20004149 bekannt.

Die DE 200 04 149 U1 offenbart eine querelastische Lageranordnung für einen Lenker in einer Radaufhängung, umfassend eine Außenbuchse und einen Lagerbolzen, die im ineinander gesteckten Zustand miteinander einen Ringraum ausbilden und in Radialrichtung elastisch gegeneinander verschiebbar sind, sowie einen ersten, in dem Ringraum angeordneten Elastomerkörper mit einer sich über einen Umfangsabschnitt erstreckenden Anschlagfläche, über welche eine Radialabstützung des Lagerbolzens an der Außenbuchse bewirkt wird. Um eine querelastische Lageranordnung zu schaffen, schlägt die DE 200 04 149 U1 vor, dass ein zweiter Elastomerkörper mit einer sich zumindest abschnittsweise über den gleichen Umfangsabschnitt erstreckenden Anschlagfläche in dem Ringraum angeordnet wird, über welche nach erfolgter Anlage an der ersten Anschlagfläche und einem zusätzlichen Radialverschiebungsweg eine weitere Radialabstützung des Lagerbolzens an der Außenbuchse bewirkt werden soll.

In der DE 103 11 211 A1 ist ein Querlenker offenbart, welcher eine Lageraufnahme für ein Lager zur Anbindung an einen Fahrzeugaufbau und/oder einen Radträger hat. Die DE 103 11 211 A1 schlägt vor, die Lageraufnahme integral mit mindestens einem der Schalenelemente eines Querlenkerabschnittes auszubilden. Im Übergangsbereich zwischen dem eigentlichen Lenkerabschnitt und der integralen Lageraufnahme bzw. dem Zapfen ist eine Stufung vorgesehen. Bei dem dargestellten Ausführungsbeispiel folgt nach einer ersten kegelförmigen Stufe und einem Zylinderabschnitt eine zweite, kegelförmige Stufe auf die Außenform des Zapfens, der in der Art eines Außensechskants zwecks einer formschlüssigen Verbindung mit einem Lager ausgebildet ist. Ein separates Lageraufnahmeelement für die Befestigung des Lagers kann damit entfallen.

Die DE 10 2004 009 724 A1 beschäftigt sich mit einem Führungslenker, der einen hohlförmigen Lenkerkörper hat, welcher aus einer Oberschale und aus einer Unterschale gebildet ist. Die Lagerstelle hat eine runde Außenkontur und kann von einem Gummilagerring umgriffen werden. Der Übergang zwischen der Lagerstelle 3 und dem eigentlichen Lenkerkörper 1 ist kegelförmig ausgebildet und ermöglicht somit eine problemlose Krafteinleitung der von der Lagerstelle auf den Lenkerkörper einwirkenden Fahrwerkskräfte.

Aus der DE 199 23 698 A1 ist ebenfalls ein Querlenker bekannt. Der Querlenker weist einen Grundkörper auf, der im wesentlichen T-förmig ausgebildet ist, und der an seinen Endabschnitten jeweils eine Lagerstelle hat. Der Grundkörper soll einstückig aus Leichtmetall gefertigt werden, wobei eine der Lagerstellen zur Aufnahme eines Hydrolagers ausgebildet ist.

J. Reimpell offenbart in seinem Fachbuch "Fahrwerktechnik Grundlagen; 31.12.1988; Vogel Buchverlag Würzburg ISBN 3-8023-0159-5, Seite 176-179 einen Querlenker mit drei Anbindungsstellen.

Aus der US2004/0084601 A1 ist eine Gummilagerbuchse bekannt, deren Lagerbuchsenachse im eingebauten Zustand vertikal orientiert ist. Die Lagerbuchse weist eine äußere und innere jeweils aus Metall bestehende Hülse und ein dazwischen angeordnetes Gummielastisches Element auf.

Die Zusammenfassung der JP 61-282106 A beschäftigt sich mit einem Querlenker welcher an seinem Grundkörper, diesen umgebende Hochstege angeordnet sind, mit denen die Steifigkeit zumindest eines Radschenkels erhöht werden soll.

Die DE 198 41 805 A1 betrifft einen Dreieckslenker für ein Kraftfahrzeug zum gelenkigen Verbinden einer Radachse mit dem Fahrzeugrahmen. Der Dreieckslenker weist einen Längsarm und einen Querarm auf. Der Dreieckslenker besteht aus zwei miteinander verbundenen Teilen, die aus Aluminium geschmiedet sind, wobei Verbindungsmittel zum verbinden der beiden Teile vorgesehen sind. Der Dreieckslenker weist einen Zapfen auf, welcher in eine Lagerbuchse einsteckbar ist.

In der DE 199 23 698 A1 ist ein Querlenker offenbart, welcher einen im Wesentlichen T-förmigen Grundkörper aufweist, und der an seinen Endabschnitten jeweils eine Lagerstelle aufweist, von denen ein Zapfen zur Aufnahme eines Hydrolagers gebildet ist. Der Querlenker ist einstückig aus Aluminium nach dem Thixocastingprozess gebildet.

Die DE 42 15 195 A1 befasst sich mit einer elastischen Lagerung eines Stützarms. Ein elastisches Element und eine Lagerbuchse sind separate Teile, um nach Ablauf deren Verwendungszeit ohne besonderen Aufwand eine Wiederverwendung der verwendeten Rohstoffe zu ermöglichen.

Ein Querlenker kann mit drei Befestigungsbereichen (Dreipunktlenker) ausgeführt sein, wobei ein erster und ein zweiter Befestigungsbereich mit dem Fahrzeugrahmenelement und der weitere, also dritte Befestigungsbereich über eine Zapfenverbindung mit einem Radträger verbunden ist. Der erste Befestigungsbereich ist als Zapfen ausgeführt, welcher in eine Lagerbuchse einsteckbar ist, wobei die Lagerbuchse mittels geeigneter Verbindungselemente mit dem Fahrzeugrahmenelement verbindbar ist. Der zweite Befestigungsbereich ist hülsenartig ausgeführt. Die drei Befestigungsbereiche liegen in einer neutralen Position im Wesentlichen in einer gemeinsamen Befestigungsebene. Der Querlenker nimmt zum Beispiel Bremskräfte und Beschleunigungskräfte auf, kann aber auch so ausgelegt sein, dass Fahrbahnunebenheiten wie Schlaglöcher, Erhebungen, Vibrationen oder dergleichen aufgenommen werden.

Der Erfindung liegt die Aufgabe zugrunde, einen Querlenker der eingangs genannten Art mit einfachen Mitteln so zu verbessern, dass z.B. eine Fahrzeugabstimmung erleichtert ist.

Erfindungsgemäß wird die Aufgabe durch einen Querlenker mit den Merkmalen des Anspruchs 1 gelöst, wobei ein Anschlagbereich vorgesehen ist, der in Umfangsrichtung gesehen unterbrochen ist, so dass diametral, bevorzugt konzentrisch ausgeführte, gegenüberliegende Verdickungen gebildet sind, wobei die Verdickungen zwischen dem Grundkörper und dem ersten Befestigungsbereich angeordnet und so ausgeführt sind, dass nur in Lateral- und Vertikalrichtung wirkende Kräfte aufgenommen werden, wenn der Grundkörper um eine Hochachse eines zweiten Befestigungsbereiches gesehen aus seiner neutralen Position heraus verdreht wird und die jeweilige Verdickung mit ihrer jeweiligen Anschlagfläche an korrespondierende Anschlagelemente der Lagerbuchse anschlägt.

Der Erfindung liegt die Erkenntnis zugrunde, dass ein konventionell ausgeführter Querlenker, insbesondere aus einem Leichtmetall, wie zum Beispiel aus Aluminium hergestellt ist, wobei dessen beispielsweise drei Befestigungsbereiche in einem nicht montierten Zustand bzw. in einer neutralen Montageposition im Wesentlichen auf einer gemeinsamen Befestigungsebene angeordnet sind. Der Querlenker ist mit seinem ersten und zweiten Befestigungsbereich jeweils an einem Fahrzeugrahmenelement, wie beispielsweise einem Hilfsrahmen angelenkt, und mit seinem weiteren, also dritten Befestigungsbereich z.B. über eine Zapfenverbindung an einem Radträger angelenkt. Diese bekannte Ausgestaltung dient in erster Linie dazu, dass der Querlenker insgesamt hinsichtlich von Gewichtsersparnissen (Leichtmetall) ausgeführt ist, wobei eine geradlinige Kraftübertragung von dem Radträger zum beispielhaften Hilfsrahmen erreicht wird.

Allerdings wurde insbesondere bei Querlenkern aus einem Leichtmetall beobachtet, dass dieser im Vergleich zu Querlenkern aus Stahl insbesondere in seinem ersten Befestigungsbereich, also an seinem Zapfen aus Festigkeitsgründen in seinem Querschnitt vergrößert werden musste um den entstehenden Belastungen standzuhalten. Dies ist aber aus Bauraumgründen sehr nachteilig, da der in seinem Querschnitt vergrößerte Zapfen zusammen mit der Lagerbuchse einen entsprechend großen Bauraum benötigt. Der erste und zweite Befestigungsbereich ist dabei jeweils so ausgelegt, dass von beiden Lagerstellen jeweils Kräfte in Axialrichtung als auch in Lateral- und Vertikalrichtung aufgenommen werden, wobei über den Querlenker eine Fahrzeugabstimmung eingestellt werden kann. Zum Beispiel kann ein bestimmtes Fahrgefühl an den Führer des Fahrzeugs weitergeleitet werden. So können insbesondere der erste und zweite Befestigungsbereich so ausge legt sein, dass der Fahrbahnkontakt des Fahrzeuges entweder ungedämpft oder gedämpft an den Führer des Fahrzeugs weitergegeben wird. Da beide Befestigungsbereiche aber Kräfte sowohl in Axialrichtung als in Lateral- und Vertikalrichtung aufnehmen können, ergeben sich so gewisse Kompromisse bezüglich der Fahrzeugabstimmung.

Mit der Erfindung dagegen wird erreicht, dass der erste Befestigungsbereich lediglich in Lateral- und Vertikalrichtung wirkende Kräfte aufnimmt, was vorteilhaft die Einstellung bezüglich der erforderlichen Steifigkeit insbesondere der Lagerbuchse, also die Fahrzeugabstimmung erleichtert, denn diese muss nun nicht mehr auf eine mögliche Aufnahme von Axialkräften ausgelegt werden. Aber auch der Zapfen muss nur noch für diese Kraftrichtungen ausgelegt werden.

Axialkräfte im Sinne der Erfindung sind Kräfte, welche längs der Fahrzeuglängsachse wirken, wobei Lateralkräfte im Sinne der Erfindung Kräfte sind, welche quer zur Fahrzeuglängsachse wirken.

Erfindungsgemäß sind die diametral gegenüberliegenden Verdickungen an Seitenflächen des Grundkörpers angeordnet, so dass ein Verdrehen um die Hochachse des zweiten Befestigungsbereiches ein Anschlagen der jeweiligen Verdickung an dem korrespondierenden Anschlagelement bewirken kann.

Um lediglich in Lateral- und Vertikalrichtung Kräfte aufzunehmen ist erfindungsgemäß vorgesehen, dass die Anschlagflächen der jeweiligen Verdickung zylindrisch ausgeführt sind. Diese erfindungsgemäße Ausgestaltung bewirkt im Gegensatz zu einer konusförmigen Ausgestaltung einer Anschlagfläche, dass die einwirkende Kraft nicht in Vektoren zerlegt wird, so dass auch nur die in Lateral- und Vertikalrichtung wirkende Kraft auf die Verdickung wirkt.

In weiter bevorzugter Ausgestaltung kann vorgesehen werden, dass der erste Befestigungsbereich von dem Anschlagbereich in Fortführung zum Zapfen einen konisch ausgeführten Übergangsbereich aufweist, der aber aufgrund der vorteilhaft angeordneten und ausgeführten Verdickung bevorzugt keinen Kontakt mit der Lagerhülse hat, wenn der Querlenker um die Hochachse des zweiten Befestigungsbereiches verdreht wird.

Die Lagerbuchse ist bevorzugt als Hydrobuchse ausgeführt. Diese weist ein Innenrohr auf, welches den Lagerzapfen umfasst, wobei zwischen dem Innenrohr und der Außenwand elastische Elemente in bekannter Weise angeordnet sind. Um nun zu erreichen, dass die jeweilige Verdickung bei einer jeweiligen Drehrichtung um die Hochachse des zweiten Befestigungsbereiches an den korrespondierenden Anschlagelement anschlagen kann, ist zweckmäßiger Weise vorgesehen, dass die Lagerbuchse mit ihrer Einsteckseite die diametral gegenüberliegend angeordneten Verdickungen übergreift. In diesem Bereich ist vorteilhaft jeweils ein elastisches Element angeordnet, welches das Anschlagelement bildet. Insofern ist auch das Anschlagelement korrespondierend zu den diametral gegenüberliegenden Verdickungen lediglich an einem Umfangsabschnitt des Übergreifbereiches angeordnet, nämlich genau dort, wo die jeweilige Verdickung bei einem Verdrehen der Querlenkers um die Hochachse des zweiten Befestigungsbereiches anschlagen kann.

Die Lagerbuchse weist die Einsteckseite und eine dazu gegenüber liegende freie Seite auf. Günstig im Sinne der Erfindung ist, wenn das Innenrohr mit seiner Einsteckseite bezogen auf die Einsteckseite der Lagerhülse in Axialrichtung der Lagerbuchse gesehen vor dem Übergreifbereich endet, wobei die dazu gegenüberliegende Seite des Innenrohrs bevorzugt bis zur Länge des Außenrohrs gezogen ist. Die jeweiligen Endbereiche des Innenrohrs sind winklig zu einem Mittenabschnitt des Innenrohrs verlaufend angeordnet, was bedeutet, dass sich das Innenrohr von der Einsteckseite in Richtung zum Mittenabschnitt im Längsschnitt gesehen konusförmig verjüngt, und sich vom Mittenabschnitt in Richtung zur dazu gegenüberliegenden Seite im Längsschnitt gesehen konusförmig erweitert. Die beiden Öffnungswinkel weisen in etwa denselben Betrag auf, sind aber gegenläufig zueinander.

In bevorzugter Ausgestaltung ist der Querlenker einstückig aus einem Leichtmetall, beispielsweise aus Aluminium gefertigt, bevorzugt geschmiedet. Der Zapfen des ersten Befestigungsbereiches ist mit einem polygonalen Querschnitt, vorzugsweise als Sechskant ausgeführt. Durch das Schmieden ist noch eine Schmiedenaht bzw. ein Schmiedegrad vorhanden, welcher an den Seitenflächen des Querlenkers angeordnet ist. Um einen Kontakt der Schmiedenaht bzw. des Schmiedegrades mit den Anschlagelementen zu vermeiden, ist erfindungsgemäß vorgesehen in diesen eine an die Lage des Schmiedegrades angepasste Ausnehmung vorzusehen, so dass ein Anschlagelement gebildet ist, welches quasi einen wellenförmigen Verlauf aufweist.

Vorteilhaft ist, dass das Anschlagelement in einer neutralen Position mit seiner Oberfläche beabstandet zur jeweiligen Verdickung angeordnet ist, so dass zumindest ein Luftspalt gebildet ist. Je nach dem welchen Betrag der Luftspalt aufweist, kann so, bezogen auf ein Verdrehen des Querlenkers um die Hochachse des zweiten Befestigungsbereiches ein entsprechend früher Anschlag oder entsprechend später Anschlag eingestellt werden. Schlägt die jeweilige Verdickung an dem entsprechenden Anschlagelement an, so wird dies abgedämpft. Insofern wird mit einem frühen Anschlag eine "weiche" Fahrzeugabstimmung und bei einem späten Anschlag eine "harte" Fahrzeugabstimmung erreicht. Die "weiche" Abstimmung kann zum Beispiel für ein Fahrzeug gewählt werden, dessen Kundenzielgruppe eine komfortable Fahrt wünschen, also eine Einstellung, bei welcher z.B. Fahrbahnunebenheiten abgedämpft werden. Die "harte" Abstimmung kann zum Beispiel für ein Fahrzeug gewählt werden, dessen Kundenzielgruppe stets eine direktere Rückmeldung z. B. über den jeweiligen Fahrbahnkontakt wünschen, also eine Einstellung, bei welcher z.B. Fahrbahnunebenheiten nicht so stark abgedämpft werden.

Der Betrag des Luftspaltes kann natürlich auch über die jeweilige Verdickung, also deren Erstreckung in Richtung zum Anschlagelement eingestellt werden.

Die jeweils diametral gegenüberliegenden Verdickungen sind bevorzugt an Seitenflächen des Querlenkers bzw. des Grundkörpers angeordnet, wobei, bezogen auf eine Fahrzeuglängsachse, auch von einer inneren und einer äußeren Verdickung gesprochen werden kann. Die innere Verdickung ist dabei auf der zur Fahrzeuglängsachse orientierten Seite des Querlenkers angeordnet, wobei dazu gegenüberliegend die äußere Verdickung angeordnet ist.

Mit der Erfindung wird ein verbesserter Querlenker zur Verfügung gestellt, welcher insbesondere aufgrund der vorteilhaften Ausführung mit den seitlich angeordneten, diametral gegenüberliegenden Verdickungen an seinem ersten Befestigungsbereich lediglich Kräfte in Lateral- und Vertikalrichtung aufnimmt. Da die damit zusammenwirkende Lagerbuchse in der bevorzugten Ausgestaltung als Hydrobuchse somit in ihrer Steifigkeit auch nur für in Lateral- und Vertikalrichtung wirkende Kräfte ausgelegt werden muss, ergibt sich insgesamt eine dahingehend vorteilhafte Ausführung, als zur Fahrzeugabstimmung auch nur zwei Kraftdimensionen beachtet werden müssen. Die Fahrzeugabstimmung ist damit feiner auf die Bedürfnisse des jeweiligen Zielkunden abstimmbar. Insofern ist quasi ein physikalisch wirkendes Anschlagelement gebildet, wobei wesentlich ist, dass dieses lediglich in Lateral- und Vertikalrichtung Kräfte aufnimmt und nicht in Axialrichtung wirkende Kräfte. Diese werden von dem zweiten Befestigungsbereich aufgenommen. Dies wird auch dadurch erreicht, dass die Verdickung eben nicht konisch, sondern zylindrisch ausgeformt ist. Vorteilhaft ist auch, dass die Verdickung nicht vollumfänglich umlaufend ausgeführt ist, sondern in Umfangsrichtung unterbrochen ist, wobei auf einer oberen und unteren Seite des Querlenkers, bezogen auf dessen Einbaulage, keine Verdickungen vorgesehen sind. Vielmehr ist die obere und untere Seite vorteilhaft so ausgeführt, dass ein Anschlag des Grundkörpers an der Lagerbuchse vermieden ist. Der Übergreifbereich ist in seiner axialen Länge gesehen vorteilhaft so ausgeführt, dass die Verdickungen an den Anschlagelementen anschlagen können, denn der Querlenker bzw. sein erster Befestigungsbereich verdreht sich relativ zur Lagerbuchse.

Zusätzlich kann das physikalisch wirkende Anschlagelement vorteilhaft so ausgeführt sein, dass dieses entsprechend der Wirkung eines Clips bzw. Aluclips, welcher an der zur Einsteckseite gegenüberliegenden Seite der Lagerbuchse angeordnet ist, ausgeführt ist, um korrespondierende Dämpfungseigenschaften zu erreichen.

Diese vorteilhaften Maßnahmen steigern zudem die Lebensdauer und verringern ein Ermüden sowohl des Zapfens als auch der Lagerbuchse.

In Figur 1 ist ein Querlenker nach dem Stand der Technik in Aufsicht dargestellt. Weitere vorteilhafte Ausgestaltungen der Erfindung sind in den Unteransprüchen und der folgenden Figurenbeschreibung offenbart. Es zeigen:
- Fig. 2: einen ersten Befestigungsbereich des Querlenkers als Ausschnitt,
- Fig. 3: einen Längsschnitt durch eine Lagerbuchse,
- Fig. 4: eine Ansicht auf eine Einsteckseite der Lagerbuchse aus Figur 3, und
- Fig. 5: den ersten Befestigungsbereich des Querlenkers aus Figur 1 dessen Zapfen in der Lagerbuchse aus Figur 3 aufgenommen ist in einem Längsschnitt.

In den unterschiedlichen Figuren sind gleiche Teile stets mit denselben Bezugszeichen versehen, weswegen diese in der Regel auch nur einmal beschrieben werden.

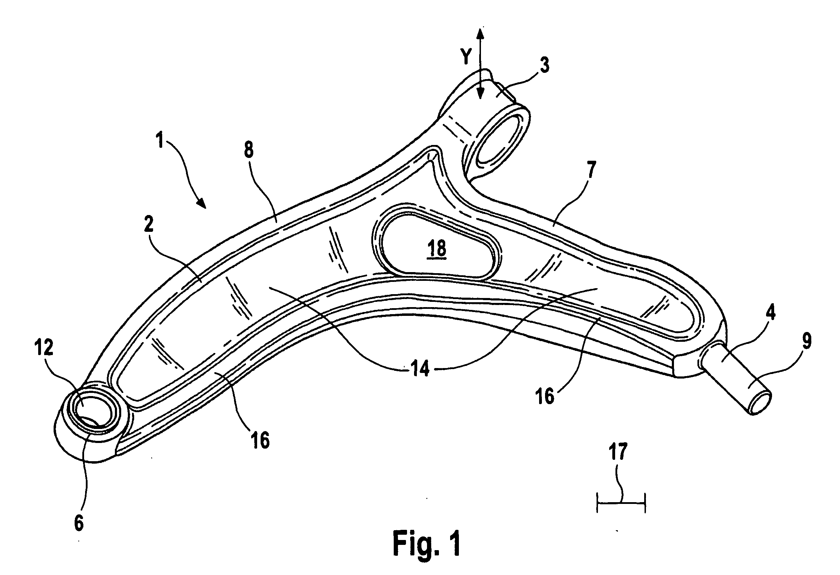

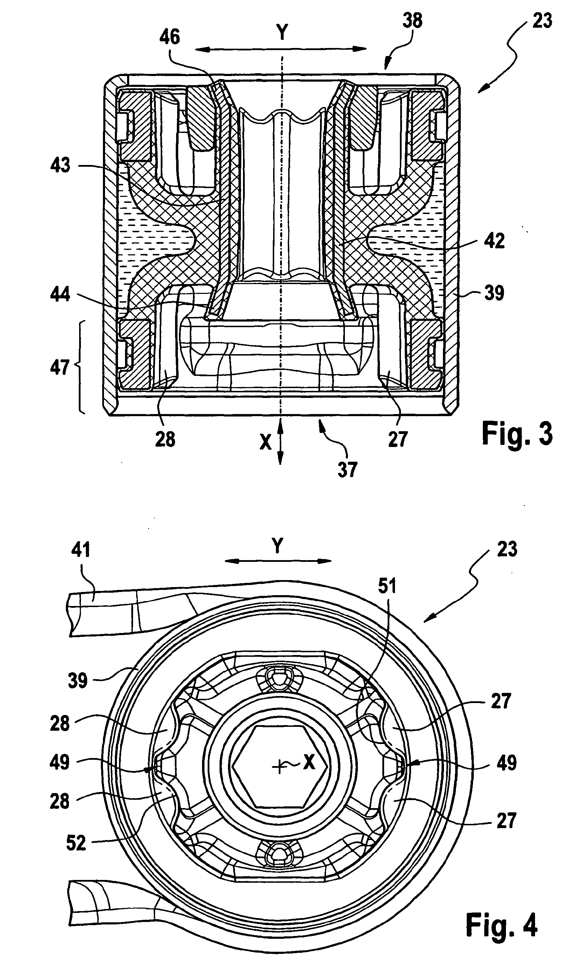

Figur 1 zeigt einen Querlenker 1 nach dem Stand der Technik. Der Querlenker 1 weist einen Grundkörper 2 auf, der einen ersten Befestigungsbereich 4 und einen zweiten Befestigungsbereich 3 zum Anlenken an ein nicht dargestelltes Fahrzeugrahmenelement, z.B. an einen Hilfsrahmen aufweist. Der Querlenker 1 weist weiter einen weiteren, also dritten Befestigungsbereich 6 zum Anlenken an einen nicht dargestellten Radträger auf. Der Grundkörper 2 ist im wesentlichen L-Förmig mit einem Rahmenschenkel 7 und einem Radschenkel 8 ausgeführt. An dem Rahmenschenkel 7 sind der erste und zweite Befestigungsbereich 3 und 4 angeordnet. Der zweite Befestigungsbereich 3 ist z.B. hülsenartig ausgeführt, wobei der erste Befestigungsbereich 4 beispielhaft als Zapfen 9 ausgeführt, welcher von einer Lagerbuchse 11 (siehe Figuren 3 bis 5) umfasst ist.

Der dritte Befestigungsbereich 6 ist an dem Radschenkel 8 angeordnet, und bildet eine Aufnahme 12 für einen Zapfen. Über den Zapfen wird der Querlenker 1 an dem Radträger angelenkt.

Der Grundkörper 2 weist weiter eine Basis 14 auf, welche von Hochstegen 16 umfasst ist, so dass der Grundkörper 2 im Querschnitt gesehen ein H-Profil 17 aufweist.

In der in Figur 1 dargestellten nicht eingebauten Lage sind die drei Befestigungsbereiche 3, 4 und 6 im Wesentlichen in einer Ebene des Grundkörpers 2 angeordnet. Zudem weist der Grundkörper 2 in seiner Basis 14 beispielhaft eine Ausnehmung 18 auf.

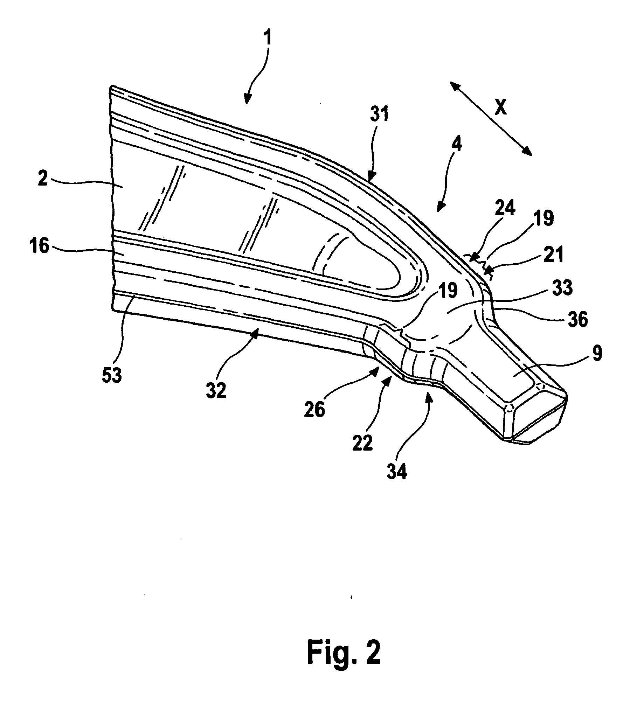

Wie der Figur 1 weiter zu entnehmen ist, sind die Basis 14 und die, diese umgebenden Hochstege 16 bis zu den jeweiligen Befestigungsbereichen 3,4 und 6 geführt, so dass der Querlenker 1 in der Einbaulage eine geradlinige Kraftübertragung von dem Radträger zum Fahrzeugrahmenelement ermöglicht. Figur 2 zeigt einen Ausschnitt aus dem Querlenker 1 dessen erster Befestigungsbereich 4 erfindungsgemäß ausgeführt ist. Der Zapfen 9 ist im Querschnitt polygonal, bevorzugt als Sechskant ausgeführt.

Der erste Befestigungsbereich 4 weist einen Anschlagbereich 19 auf, der in Umfangsrichtung gesehen unterbrochen ist, so dass zwei diametral gegenüberliegende Verdickungen 21 und 22 gebildet sind. Die Verdickungen 21 und 22 sind so angeordnet und ausgeführt, dass nur in Lateral- und Vertikalrichtung wirkende Kräfte aufgenommen werden, wenn der Grundkörper 2 um eine Hochachse Y (Figur 1) des zweiten Befestigungsbereiches 3 gesehen aus einer neutralen Position heraus verdreht wird, und die jeweiligen Verdickung 21 oder 22 mit ihrer jeweiligen Anschlagfläche 24 bzw. 26 an korrespondierenden Anschlagelementen 27 bzw. 28 der Lagerbuchse 23 anschlägt.

Die Verdickungen 21 bzw. 22 sind jeweils an einer Seite 31 bzw. 32, bevorzugt an den jeweiligen Hochstegen 16 des Grundkörpers 2, also bevorzugt in der gemeinsamen Befestigungsebene der drei Befestigungsbereiche 3, 4 und 6 angeordnet. Bezogen auf eine Fahrzeuglängsachse X kann die Seite 31 als Innenseite 31 und die dazu gegenüberliegende Seite 32 als Außenseite 32 bezeichnet werden; so dass die Verdickung 21 als Innenverdickung 21 und die Verdickung 22 als Außenverdickung 22 bezeichnet werden kann. Die zwischen den beiden Seiten 31 bzw. 32 liegenden Oberseite 33 und Unterseite 34 des Anschlagbereiches 19 sind ohne Verdickung eben verlaufend ausgeführt. Der Anschlagbereich 19 geht in den Zapfen 9 über, wobei hier beispielhaft ein stufenloser Übergang 36, der quasi konusförmig ausgeführt ist, dargestellt ist.

Die jeweiligen Anschlagflächen 24 bzw. 26 der Verdickungen 21 bzw. 22 sind zylindrisch verlaufend ausgeführt.

Die Lagerbuchse 23 (Figuren 3 und 4) ist beispielhaft als Hydrobuchse ausgeführt, und weist eine Einsteckseite 37 und eine dazu gegenüberliegende Seite 38 auf. Die Lagerbuchse 23 weist einen Außenmantel 39 auf, welcher von einer Schelle 41 umgeben ist. Mit der Schelle 41 wird der erste Befestigungsbereich 4 mit dem Fahrzeugrahmenelement verbunden. Innerhalb des Außenmantels 39 ist ein Innenrohr 42 angeordnet, das einen Mittenabschnitt 43 und jeweils ein sich daran anschließenden Endbereich 44 bzw. 46 aufweist. Der jeweilige Endbereich 44 bzw. 46 ist ausgehend vom Mittenabschnitt 43 jeweils sich konusförmig erweiternd ausgeführt. Die Lagerbuchse 23 weist ferner übliche Komponenten der beispielhaften Hydrobuchse auf.

An der Einsteckseite 37 ist ein Übergreifbereich 47 vorgesehen, an welchem die Anschlagelemente 27 bzw. 28 angeordnet sind, welche als Elastomerkörper bzw. Hydrokörper ausgeführt sind. Die Anschlagelemente 27 bzw. 28 sind korrespondierend zu den Verdickungen 21 bzw. 22 lediglich an einem Umfangsabschnitt, also nicht in Umfangsrichtung umlaufend an den Außenmantel 39 angeordnet. Die Anschlagelementen 27 bzw. 28 weisen jeweils eine etwa mittig sitzende Ausnehmung 49 auf, so dass jeweils ein Anschlagelement 27 bzw. 28 mit einer quasi wellenförmigen Anschlagfläche 51 gebildet ist. Die Erhebungen sind dabei mit ihrem Zenit 52 in Richtung zu einer Mittelachse X der Lagerhülse 23 orientiert.

Wie in Figur 2 zu erkennen, weist der Grundkörper an seinen Seiten 31 bzw. 32 einen Schmiedegrad 53 auf. Die Ausnehmungen 49 in den Anschlagelementen 27 und 28 dienen dazu, dass der Schmiedegrad 53 keinen Kontakt zu diesen hat, wenn die jeweilige Verdickung 21 bzw. 22 an dem Anschlagelement 27 bzw. 28 anschlägt.

Wie beispielhaft dargestellt, ist das Innenrohr 42 mit seinem zur Einsteckseite 37 orientierten Endbereich 44 innerhalb des Außenmantels 39 endend aufgenommen, wobei der Endbereich 44 vor dem Übergreifbereich 47 endet. Der dazu gegenüberliegende Endbereich 46 des Innenrohrs 42 endet in etwa auf der Höhe des Außenmantels 39.

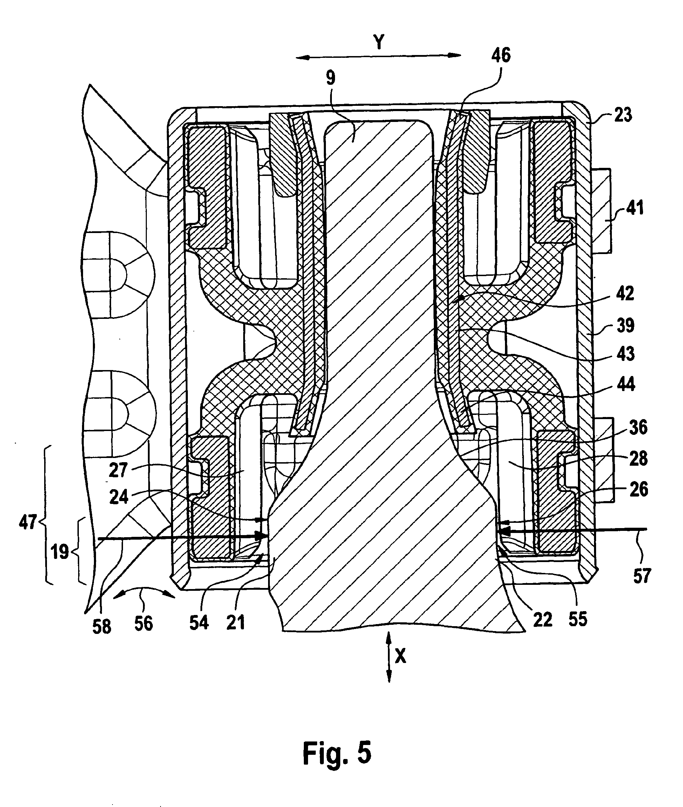

Figur 5 zeigt den Querlenker 1, dessen Zapfen 9 in die Lagerbuchse 23 eingesteckt ist. Das Innenrohr 42 liegt mit seinem Mittenabschnitt 43 an den Außenkanten des polygonalen Zapfens 9 an. Das freie Ende des Zapfens 9 endet etwa im Bereich des Endbereiches 46 des Innenrohrs 42 innerhalb des Außenmantels 39.

Der Zapfen 9 geht über den Übergang 36 in den Anschlagbereich 19 über. Wie dargestellt ist der Übergang 36 im Wesentlichen konusförmig, mit einem leicht in Richtung zu seiner Mittelachse gewölbten Verlauf ausgeführt, wobei auch der Endbereich 44 des Innenrohrs 42 mit einem entsprechenden Öffnungswinkel ausgeführt ist.

Der Anschlagbereich 19 mit seinen Verdickungen 21 bzw. 22 wird von dem Übergreifbereich 47 übergriffen, so dass der Anschlagbereich 19 korrespondierend zu den Anschlagelementen 27 bzw. 28 angeordnet sind.

Die Anschlagelemente 27 und 28 sind zusammen mit den Verdickungen 21 bzw. 22 so ausgeführt, dass in einer neutralen Position des Querlenkers 1 bzw. seines ersten Befestigungsbereiches 4 und der Lagerbuchse 23 die Luftspalte 54 und 55 ausgebildet werden. In Figur 5 ist die neutrale Position beispielhaft dargestellt. Dabei kann der Luftspalt 54 größer, gleich groß oder kleiner als der Luftspalt 55 ausgeführt sein, was ein Abstimmen des Fahrzeugs variabler macht. Wie beispielhaft in Figur 5 dargestellt, ist der in der Zeichnungsebene links dargestellte Luftspalt 54 größer als der in der Zeichnungsebene rechts dargestellte Luftspalt 55. Diese Ausgestaltung ist aber lediglich beispielhaft, und soll nicht beschränkend sein, wie oben angedeutet. Insofern ist zumindest ein Luftspalt gebildet, wenn die Beträge der einander gegenüberliegenden gleich sind, wobei zwei Luftspalte gebildet sind, wenn die Beträge unterschiedlich sind.

Verdreht sich nun der Querlenker 1 bzw. der erste Befestigungsbereich 4 relativ zur Lagerbuchse 23 um die Hochachse Y im zweiten Befestigungsbereich 3, würde sich der erste Befestigungsbereich 4 mit seinem Anschlagbereich 19 relativ zur Lagerbuchse 23 innerhalb dieser in der Zeichnungsebene einer leichten Kreisbahn folgend verlagern, also in der Zeichnungsebene entweder nach rechts oder nach links (Pfeile 56).

Gelangt die Verdickung 21 oder 22 dabei in Kontakt mit dem Anschlagelement 27 oder 28 werden aufgrund der vorteilhaften Anordnung und Ausgestaltung der Verdickungen 21 oder 22 zusammen mit den Anschlagelementen 27 oder 28 nur in Lateral- und Vertikalrichtung wirkende Kräfte übertragen, was mittels der Pfeile 57 bzw. 58 beispielhaft dargestellt ist.

### Bezugszeichenliste:

- 1: Querlenker
- 2: Grundkörper
- 3: zweiter Befestigungsbereich
- 4: erster Befestigungsbereich
- 5:
- 6: dritter Befestigungsbereich
- 7: Rahmenschenkel
- 8: Radschenkel
- 9: Zapfen
- 10:
- 11:
- 12: Aufnahme
- 13: Zapfen
- 14: Basis
- 15:
- 16: Hochstege
- 17: H-Profil
- 18: Ausnehmung
- 19: Anschlagbereich
- 20:
- 21: Verdickung (innen)
- 22: Verdickung (außen)
- 23: Lagerbuchse
- 24: Anschlagfläche von 21
- 25:
- 26: Anschlagfläche von 22
- 27: Anschlagelement an 23
- 28: Anschlagelement an 23
- 29:
- 30:
- 31: Innenseite
- 32: Außenseite
- 33: Oberseite
- 34: Unterseite
- 35:
- 36: Übergang von 19 zu 9
- 37: Einsteckseite von 23
- 38: Seite gegenüberliegend zu 37
- 39: Außenmantel
- 40:
- 41: Schelle
- 42: Innenrohr
- 43: Mittenabschnitt von 42
- 44: Endbereich von 42
- 45:
- 46: Endbereich von 42
- 47: Übergreifbereich
- 48:
- 49: Ausnehmung
- 50:
- 51: Anschlagfläche
- 52: Zenit
- 53: Schmiedegrad
- 54: Luftspalt
- 55: Luftspalt
- 56: Doppelpfeil
- 57: Kraftpfeil
- 58: Kraftpfeil

## Patentansprüche

1. Querlenker-Lagerbuchse Anordnung bestehend aus einem Querlenker (1) mit einem Grundkörper (2), der zumindest einen ersten Befestigungsbereich (4) zum Anlenken an ein Fahrzeugrahmenelement aufweist, wobei der erste Befestigungsbereich (4) einen Zapfen (9) aufweist, der von einer Lagerbuchse (23) umfasst ist, wobei der Querlenker einen Anschlagbereich (19) aufweist, wobei: der Anschlagbereich (19) in Umfangsrichtung gesehen unterbrochen ist, so dass diametral gegenüberliegende Verdickungen (21, 22) an Seitenflächen (31, 32) des Grundkörpers (3) gebildet sind, die zwischen dem Grundkörper (2) und dem ersten Befestigungsbereich (4) angeordnet sind, wobei Anschlagflächen (24, 26) der jeweiligen Verdickung (21, 22) zylindrisch ausgeführt sind, so dass nur in Lateral- und Vertikalrichtung wirkende Kräfte aufgenommen werden, wenn der Grundkörper (2) um eine Hochachse (Y) eines zweiten Befestigungsbereiches (3) gesehen aus seiner neutralen Position heraus verdreht wird und die jeweilige Verdickung (21, 22) mit ihrer jeweiligen Anschlagfläche (24, 26) an korrespondierenden Anschlagelementen (27, 28) der Lagerbuchse (23) anschlägt, wobei die korrespondierend zu den Verdickungen (21, 22) ausgeführten und angeordneten Anschlagelemente (27, 28) jeweils eine Ausnehmung (49) aufweisen, so dass jeweils ein Anschlagelement (27, 28) mit einer wellenförmigen Anschlagfläche (51) gebildet ist, wobei die Erhebungen mit ihrem Zenit (52) in Richtung zu einer Mittelachse der Lagerbuchse (23) orientiert sind.

2. Querlenker-Lagerbuchse Anordnung nach Anspruch 1,
**dadurch gekennzeichnet, dass**
der erste Befestigungsbereich (4) von dem Anschlagbereich (19) in Fortführung zum Zapfen (9) einen konisch ausgeführten Übergangsbereich (36) aufweist.

3. Querlenker-Lagerbuchse Anordnung nach Anspruch 1 oder 2,
**dadurch gekennzeichnet, dass**
die Lagerbuchse (23) als Hydrobuchse ausgeführt ist.

4. Querlenker-Lagerbuchse Anordnung nach einem der vorhergehenden Ansprüche,
**dadurch gekennzeichnet, dass**
die Lagerbuchse (23) mit ihrer Einsteckseite (37) die diametral gegenüberliegend angeordneten Verdickungen (21, 22) übergreift, wobei ein Übergreifbereich (47) gebildet ist.

5. Querlenker-Lagerbuchse Anordnung nach einem der vorhergehenden Ansprüche,
**gekennzeichnet durch**
ein Innenrohr (42), das an einer Einsteckseite (37) der Lagerbuchse (23) innerhalb dieser in Axialrichtung gesehen vor ihrem Übergreifbereich (36) endet.

6. Querlenker-Lagerbuchse Anordnung nach einem der vorhergehenden Ansprüche, wobei der Querlenker aus einem Leichtmetall, bevorzugt aus Aluminium gebildet ist.

7. nach einem der vorhergehenden Ansprüche,
**dadurch gekennzeichnet, dass**
der Zapfen (9) des Querlenkers einen polygonalen Querschnitt aufweist.

8. Querlenker-Lagerbuchse Anordnung nach einem der vorhergehenden Ansprüche,
**dadurch gekennzeichnet, dass**
das jeweilige Anschlagelement (27, 28) bzw. seine Anschlagfläche (51) im montierten Zustand in Richtung zur jeweils korrespondierenden Verdickung (21, 22) orientiert ist, wobei in einer neutralen Position zumindest ein Luftspalt (54, 55) zwischen den jeweiligen Anschlagflächen (24, 27; 26, 28) gebildet ist.

9. Querlenker-Lagerbuchse Anordnung nach einem der vorhergehenden Ansprüche,
**dadurch gekennzeichnet, dass**
das jeweilige Anschlagelement (27, 28) bzw. seine Anschlagfläche (51) im montierten Zustand in Richtung zur jeweils korrespondierenden Verdickung (21, 22) orientiert ist, wobei in einer neutralen Position Luftspalte (54, 55) zwischen den jeweiligen Anschlagflächen (24, 27; 26, 28) gebildet werden, welche in ihrem Betrag unterschiedlich sind.

## Claims

1. Transverse link bearing bush arrangement composed of a transverse link (1) having a main body (2), which has at least one first fixing region (4) for pivotal attachment to a vehicle frame element, the first fixing region (4) having a journal (9), which is surrounded by a bearing bush (23), the transverse link having a stop region (19), the stop region (19) being interrupted when viewed in the circumferential direction, resulting in the formation of diametrically opposite thickened portions (21, 22) on side faces (31, 32) of the main body (2), which thickened portions are arranged between the main body (2) and the first fixing region (4), stop surfaces (24, 26) of the respective thickened portion (21, 22) being of cylindrical design in such a way that only forces acting in the lateral and vertical directions are absorbed when the main body (2) is twisted out of the neutral position thereof, about a vertical axis (Y) of a second fixing region (3), and the respective thickened portion (21, 22) strikes against corresponding stop elements (27, 28) of the bearing bush (23) by means of the respective stop surface (24, 26) thereof, the stop elements (27, 28), which are formed and arranged correspondingly to the thickened portions (21, 22), having in each case one recess (49) such that in each case one stop element (27, 28) with an undulating stop surface (51) is formed, the elevations being oriented with their zenith (52) in the direction of a central axis of the bearing bush (23).

2. Transverse link bearing bush arrangement according to Claim 1,
**characterized in that**
the first fixing region (4) has a transitional region (36) of conical design leading as a continuation from the stop region (19) to the journal (9).

3. Transverse link bearing bush arrangement according to Claim 1 or 2,
**characterized in that**
the bearing bush (23) is designed as a hydraulic bush.

4. Transverse link bearing bush arrangement according to one of the preceding claims,
**characterized in that**
the insertion end (37) of the bearing bush (23) fits over the diametrically oppositely arranged thickened portions (21, 22), forming an overlapping region (47).

5. Transverse link bearing bush arrangement according to one of the preceding claims,
**characterized by**
an inner tube (42), which ends at an insertion end (37) of the bearing bush (23) and within the latter, in a position ahead of the overlapping region (36) of said bush when viewed in the axial direction.

6. Transverse link bearing bush arrangement according to one of the preceding claims, the transverse link being formed from a light metal, preferably from aluminum.

7. Transverse link bearing bush arrangement according to one of the preceding claims,
**characterized in that**
the journal (9) of the transverse link has a polygonal cross section.

8. Transverse link bearing bush arrangement according to one of the preceding claims,
**characterized in that**
the respective stop element (27, 28) or the stop surface (51) thereof is oriented in the direction of the respectively corresponding thickened portion (21, 22) in the assembled condition, at least one air gap (54, 55) being formed between the respective stop surfaces (24, 27; 26, 28) in a neutral position.

9. Transverse link bearing bush arrangement according to one of the preceding claims,
**characterized in that**
the respective stop element (27, 28) or the stop surface (51) thereof is oriented in the direction of the respectively corresponding thickened portions (21, 22) in the assembled condition, air gaps (54, 55) of different sizes being formed between the respective stop surfaces (24, 27; 26, 28) in a neutral position.

## Revendications

1. Agencement d'un bras oscillant transversal et d'une douille palier constitué d'un bras oscillant transversal (1) avec un corps de base (2) qui présente au moins une première zone de fixation (4) devant être connectée de manière pivotante à un élément de châssis du véhicule, la première zone de fixation (4) présentant un tourillon (9) qui est entouré par une douille palier (23), le bras oscillant transversal présentant une zone de butée (19), la zone de butée (19) étant interrompue, vu dans la direction périphérique, de telle sorte que des épaississements diamétralement opposés (21, 22) soient formés au niveau de faces latérales (31, 32) du corps de base (2), lesquels sont disposés entre le corps de base (2) et la première zone de fixation (4), des faces de butée (24, 26) de l'épaississement respectif (21, 22) étant réalisées sous forme cylindrique, de telle sorte que seules des forces agissant dans la direction latérale et verticale soient reçues, lorsque le corps de base (2) est tourné, vu depuis sa position neutre, autour d'un axe vertical (Y) d'une deuxième zone de fixation (3) et que l'épaississement respectif (21, 22) bute avec sa face de butée respective (24, 26) contre des éléments de butée correspondants (27, 28) de la douille palier (23), les éléments de butée (27, 28) réalisés et disposés de manière correspondant aux épaississements (21, 22) présentant chacun un évidement (49), de telle sorte qu'un élément de butée respectif (27, 28) soit formé avec une face de butée (51) de forme ondulée, les rehaussements étant orientés avec leur zénith (52) dans la direction d'un axe médian de la douille palier (23).

2. Agencement d'un bras oscillant transversal et d'une douille palier selon la revendication 1,
**caractérisé en ce que**
la première zone de fixation (4) présente, depuis la zone de butée (19) dans le prolongement jusqu'au tourillon (9), une zone de transition réalisée sous forme conique (36).

3. Agencement d'un bras oscillant transversal et d'une douille palier selon la revendication 1 ou 2,
**caractérisé en ce que**
la douille palier (23) est réalisée sous forme de douille hydraulique.

4. Agencement d'un bras oscillant transversal et d'une douille palier selon l'une quelconque des revendications précédentes,
**caractérisé en ce que**
la douille palier (23) vient en prise avec son côté d'insertion (37) par-dessus les épaississements (21, 22) disposés de manière diamétralement opposée, une zone d'engagement par le dessus (47) étant formée.

5. Agencement d'un bras oscillant transversal et d'une douille palier selon l'une quelconque des revendications précédentes,
**caractérisé par**
un tube interne (42) qui se termine au niveau d'un côté d'insertion (37) de la douille palier (23) à l'intérieur de celle-ci, vu dans la direction axiale, avant sa zone d'engagement par le dessus (36).

6. Agencement d'un bras oscillant transversal et d'une douille palier selon l'une quelconque des revendications précédentes, dans lequel le bras oscillant transversal est formé d'un métal léger, de préférence d'aluminium.

7. Agencement d'un bras oscillant transversal et d'une douille palier selon l'une quelconque des revendications précédentes,
**caractérisé en ce que** le tourillon (9) du bras oscillant transversal présente une section transversale polygonale.

8. Agencement d'un bras oscillant transversal et d'une douille palier selon l'une quelconque des revendications précédentes,
**caractérisé en ce que**
l'élément de butée respectif (27, 28) ou sa face de butée (51) est orienté(e) dans l'état monté dans la direction de l'épaississement respectif correspondant (21, 22), au moins un entrefer (54, 55) étant formé entre les faces de butée respectives (24, 27 ; 26, 28) dans une position neutre.

9. Agencement d'un bras oscillant transversal et d'une douille palier selon l'une quelconque des revendications précédentes,
**caractérisé en ce que**
l'élément de butée respectif (27, 28) ou sa face de butée (51) est orienté dans l'état monté dans la direction de l'épaississement respectif correspondant (21, 22), des entrefers (54, 55) entre les faces de butée respectives (24, 27 ; 26, 28) étant formés dans une position neutre, lesquels présentent une mesure différente.
